# FASCICULE DE BREVET EUROPEEN

(11) **EP 2 776 370 B1**
(45) Date de publication et mention de la délivrance du brevet: **10.05.2017**
(21) Numéro de dépôt: 12783237.6
(22) Date de dépôt: 09.11.2012
(51) Int. Cl.: C02F 1/44, C02F 3/28, C02F 1/68

(54) **PROCÉDÉ ET DISPOSITIF DE TRAITEMENT ET DE PURIFICATION D'EAUX USÉES**
VERFAHREN UND VORRICHTUNG ZUR ABWASSERAUFBEREITUNG UND -REINIGUNG
METHOD AND DEVICE FOR TREATING AND PURIFYING WASTEWATER

(30) Priorité: 10.11.2011 EP 11188658
(43) Date de publication de la demande: 17.09.2014
(73) Titulaire: GPC International S.A., 3321 Berchen (LU)
(72) Inventeur: CANQUERY, Fabrice, 1300 Wavre (BE); RICHER, Catherine, Montpellier (FR)
(74) Mandataire: Dennemeyer & Associates S.A.
(86) Numéro de dépôt international: PCT/EP2012/072295
(87) Numéro de publication internationale: WO 2013/068545

(56) Documents cités:
- EP-A1- 0 127 240
- WO-A1-2005/003044
- WO-A1-2009/021552
- US-A1- 2005 145 548
- US-A1- 2007 199 894

## Description

La présente invention concerne un procédé de traitement et de purification d'eaux usées pour produire de l'eau et de l'énergie selon la revendication 1, un dispositif multi modulaire de mise en oeuvre du procédé selon la revendication 7, et une utilisation du dispositif selon les revendications 13 et 14. La présente invention concerne aussi un système de production in situ d'eau de haute qualité, y compris d'eau potable, à partir des eaux usées, à faible empreinte environnementale, pour des immeubles et des blocs d'immeubles ou pour des usines.

### Domaine d'application :

La gestion du cycle urbain de l'eau comprenant notamment:
- les systèmes de production et de distribution d'eau potable, soit à partir de ressources en eau douce, soit à partir de ressources en eau salée,
- les systèmes de collecte et de traitement des eaux résiduaires, en particulier les eaux usées domestiques.

L'approvisionnement en eau de sites sous la pression de ressources insuffisantes par rapport à leur besoins (éloignement des ressources, région à stress hydrique), comprend notamment :
- les complexes touristiques à l'écart des systèmes centralisés de distribution
- les industries consommatrices d'eau de qualité (bonne ou très élevée).

L'homme du métier intervenant dans la présente invention doit posséder des connaissances en hydroélectricité, hydraulique, eaux usées, centrales bioénergétiques et en traitement des eaux recyclées.

### Etat de la Technique:

D'une manière générale, la recherche d'art antérieur n'a pas révélé de brevet ou de publications décrivant des inventions proches ou identiques à celles revendiquées dans la présente demande de brevet : pour illustrer cela, trois brevets US et un article sont analysés ci-après.

Le brevet US N° 6838000 (N° de Publication 20030070986) divulgue un procédé d'utilisation d'eaux usées comprenant la récupération séparée d'eaux grises et/ou noires et une membrane de filtration de ces eaux. Un procédé de production d'eau potable à partir d'eaux grises y est aussi mentionné. Un dispositif de production d'eau potable à partir d'eaux grises et un dispositif d'utilisation d'eaux noires y est divulgué.
US 20030070986 montre que les fèces sont séparées des urines alors qu'aucune séparation n'est nécessaire dans la présente invention. US 20030070986 divulgue une production de méthane (CH4) mais aucune utilisation in situ n'est en faite (traitement anaérobie par digestion: réduction des matières évacuées). US 20030070986 ne divulgue aucune étape de récupération de chaleur. US 20030070986 est un procédé qui consomme énormément d'énergie. US N° 20030070986 ne porte pas sur les volets énergétiques et sur le contrôle avancé, objets de la présente invention.

Le brevet US N°6290852 concerne un procédé et un dispositif de purification et/ou de traitement d'eaux uses communales et/ou industrielles, particulièrement pour une utilisation d'installations marines comprenant un dispositif de réactions biologiques aérobies dans lequel sont reçues les eaux usées à traiter et/ou à purifier. Une biomasse à haute concentration est mis en suspension dans le dispositif et les eaux usées y sont ajoutées. Les eaux usées pré-purifiées ou pré-traitées sont fournies à un dispositif comprenant une membrane de séparation dans lequel une séparation en un corps filtré (perméat) et en un corps de rétention (retentate) est effectuée. Le corps de rétention est au-moins partiellement retourné au dispositif de réaction, alors que le corps perméable est soit évacué comme eau réutilisable ou pure ou est retourné au dispositif de réaction. Le brevet US N°6290852 ne comporte ni intégration hydraulique, ni intégration énergétique.

La publication de brevet US N°20080201018 divulgue un dispositif de gestion d'un procédé de traitement d'eaux usées résidentielles comprenant une unité de contrôle in situ. L'unité de contrôle fournit un contrôle local et des alarmes et envoie des rapports de statuts et/ou des alarmes à un centre de contrôle éloigné via un dispositif télémétrique. Le centre de contrôle éloigné envoie des informations concernant le procédé disponible par un site internet. US N°20080201018 développe un système de supervision et non pas de contrôle avancé d'un procédé tel que proposé dans la présente invention.

Un **Article** de Ralf Otterpohl, Andrea Albold and Martin Oldenburg, Otterpohl Wasserkonzepte, Kanalstraße 52, D-23552 Lübeck, Allemagne dont le titre est "Differentiating Management of Water Resources and Waste in Urban Areas" divulgue que la tâche principale des dispositifs d'assainissement est de conserver les sols fertiles. Les nouveaux procédés intégrés de gestion d'assainissement et de déchets devront respecter différents niveaux de qualité : les eaux noires avec les déchets biologiques, les eaux grises avec les eaux de pluie et les déchets non biodégradables.

Cet article montre qu'il y a des enjeux et des besoins pour des traitements décentralisés en milieu urbains, et qu'aucune des solutions proposées ne s'appuie sur l'une ou plusieurs des solutions objet des revendications de la présente invention.

US 2005/0145548 décrit un procédé pour tester le PH d'un filtrat et une pompe manipulée par un contrôleur (automate) qui injecte un agent neutralisant dans le filtrat pour réduire l'alcalinité du filtrat. Aucun système de récupération de chaleur n'est décrit. L'échangeur de chaleur sert à refroidir à 25-30°C(selon le paragraphe 47).

EP 0127240 décrit un procédé de traitement de déchets produisant de l'énergie électrique à partir de gaz, cette énergie étant utilisée pour faire fonctionner une unité de filtration membranaire.

US 2007/0199894 divulgue un procédé de traitement de la distillation de l'éthanol produisant de l'électricité et de l'eau.
L'état de la technique le plus proche est US 2007/0199894.
Les différences entre la présente invention et US 2007/0199894 sont :
un troisième module de production d'énergie électrique (39a) et d'énergie thermique (39b) comprenant au moins une mini centrale de co-génération (39) recevant du biogaz (38) produit par au moins un réacteur anaérobie (35) lui-même relié à au moins une pompe à chaleur (32A, 32B) par au moins une **boucle de fluide de chauffage** (36) puisant de l'énergie thermique à ladite pompe à chaleur (32A, 32B) qui est elle-même reliée audit échangeur thermique (31 A, 31 B, 31 C) du second module par au moins une boucle de fluide caloporteur (33) et ledit au moins un réacteur anaérobie (35) est chauffé par la boucle de chauffage (36) formant un circuit fermé et fournissant de l'énergie thermique récupérée par ledit échangeur thermique (31 A, 31 B, 31 C).

**L'effet technique** fournit par les différences mentionnées ci-dessus est d'économiser de l'énergie en utilisant l'énergie thermique interne des eaux usées pour chauffer le réacteur anaérobie (35), de conserver une excellente qualité de l'eau, d'augmenter le taux d'utilisation de l'énergie interne (chimique et thermique) des eaux usées (cf tableau 1 où la présente invention possède un taux d'utilisation d'énergie interne compris entre 50% et 90% alors que US 2007/0199894 possède seulement un taux d'utilisation d'énergie interne compris entre 10% et 20%) et de stocker de l'énergie récupérée (énergie électrique et/ou fluide sous forme comprimée).
Le **problème à résoudre** par la présente invention est premièrement d'économiser de l'énergie thermique en captant une partie de la chaleur des eaux usées pour chauffer un réacteur anaérobie afin d'améliorer la production de biogaz et deuxièmement de produire de l'eau de haute qualité (potable) de manière conjointe et simultanée.
Aucun document de l'art antérieur ne divulgue la combinaison des différentes étapes des revendications indépendantes de la présente invention.

Dans les dispositifs centralisés actuellement mis en oeuvre en milieu urbain pour produire et distribuer de l'eau potable, puis pour collecter et traiter les eaux usées, il n'est prévu aucune action de traitement au point d'usage, ce qui engendre:
- la nécessité de prévoir une sur-qualité de l'eau potable produite dans l'usine centralisée, de façon à ce que la qualité résiduelle au point d'usage soit suffisante malgré une dégradation continue dans les réseaux de distribution,
- la nécessité de recourir à des doses élevées de désinfectant, le plus souvent chlorés, pour lutter contre la contamination microbienne dans les réseaux,
- la nécessité d'une surproduction d'eau potable pour compenser les importantes fuites sur les réseaux (qui restent des infrastructures très sollicitées et fragiles), ce qui conduit à une sur exploitation des ressources en eau douce,
- la nécessité de construire des linéaires (tuyaux) importants de canalisations pour desservir les gros utilisateurs éloignés des usines de production d'eau et limités en ressources, tels que les complexes touristiques ou certaines industries, ce qui représente de lourds investissements et dégrade fortement l'empreinte environnementale de la gestion de l'eau sur le territoire concerné,
- une mise en oeuvre très difficile des moyens de lutte contre une attaque bio-terroriste sur les points centralisés (usine de potabilisation, réservoirs).
Tous ces inconvénients des systèmes centralisés se traduisent par des surcoûts souvent non compensés par les économies d'échelle espérées sur les grands systèmes.

Pour pallier à ces inconvénients, des améliorations incrémentales sont proposées, telles des programmes de lutte contre les fuites ou encore un suivi plus élaboré pour une meilleure gestion de la désinfection chimique, mais le plus souvent c'est un recours à des traitements centralisés encore plus sophistiqués et à des capacités de production supplémentaires qui sont proposées, conduisant à des coûts d'investissements et d'exploitation toujours plus élevés. Le recours à des systèmes semi-centralisés (« satellites ») reste confidentiel car il n'atténue que très peu les inconvénients des systèmes centralisés.
Les principales mises en oeuvre de systèmes de traitement in situ, au point d'usage, sont les dispositifs de traitement des eaux grises (par exemple : eaux de douche, eaux de baignoire, eaux de lavabos et bidets) en pied d'immeuble en vue de leur utilisation pour certains usages dans le même bâtiment (WC, lavages de sols et de véhicules, arrosages) principalement appliqués par contrainte réglementaire au Japon et dans quelques autres pays: la recherche de l'art antérieur montre qu'il n'existe pas de traitement complet des eaux usées in situ, au point d'usage, en vue d'un recyclage à des niveaux supérieurs à 50%. Tous les systèmes actuellement proposés sont fortement consommateurs d'énergie: ainsi, une amélioration de l'empreinte EAU est obtenue au prix d'une augmentation des émissions de CO₂, ce qui engendre une faible amélioration de l'empreinte environnementale globale. Le procédé de traitement et de purification d'eaux usées est défini dans la revendication 1 de la présente invention, le dispositif multi modulaire de traitement et de purification d'eaux usées est défini dans la revendication 7 et l'utilisation du dispositif est définie dans les revendications 13 et 14. La solution envisagée par la présente invention consiste à généraliser l'utilisation de dispositifs décentralisés de recyclage in situ des eaux usées, à basse énergie, permettant de baisser la pression sur les ressources et d'adopter une nouvelle gestion de la qualité de l'eau avec un dernier saut qualitatif in situ. Cette production locale d'eau recyclable permet de satisfaire différents usages du lieu concerné sans faire appel à de l'eau potable provenant du système centralisé : il en résulte une forte baisse de la pression sur les ressources naturelles en eau (usage plus intensif de l'eau).
La présente invention concerne un procédé continu de production d'eau de haute qualité (eau potable, eau de procédé) à partir d'eaux usées sur le site même de leur émission, ce procédé nécessitant de faibles quantités d'énergie exogène. Il est possible de récupérer une énergie chimique (matières carbonées) et une énergie calorifique ou thermique des eaux usées (température de départ des eaux usées (environ 28°C) lors de l'entrée dans le dispositif multi modulaire). Le terme « récupérer de l'énergie » peut être défini par le fait de valoriser l'énergie chimique et l'énergie thermique contenues dans les eaux usées, de préférence sans utiliser de l'énergie additionnelle, sans utiliser de l'énergie exogène.
Le système associe, dans un mode de réalisation préféré de la présente invention, quatre composantes sur la base d'une intégration optimisant à la fois les flux d'eau, les flux de matière et les flux d'énergie :
- un premier module extrait de l'eau clarifiée (càd zéro particules, eau sans particules grossières) à partir des eaux usées (eaux noires et/ou eaux grises), tout en concentrant l'énergie chimique (par exemples : les matières fécales) contenue dans ces mêmes eaux usées (matières carbonées),
- un second module produit de l'eau de très haute qualité, désinfectée, à partir de l'eau clarifiée, la potabilité pouvant être aisément garantie par un dispositif multi barrières avec contrôle d'intégrité en ligne en continu.
- un troisième module produit de l'énergie :
   - à partir du carbone récolté dans l'effluent (matières fécales) ou provenant d'autres sources de matières organiques tels que les déchets organiques de cuisine, les graisses et huiles alimentaires (biogaz servant à produire de l'électricité),
   - à partir de la chaleur récupérée sur les équipements des deux premiers modules,
   - à partir de la chaleur récupérée dans les eaux usées (différence de température comprise entre 8°C et 15°C entre les eaux usées de départ (ex : 28°C) et l'eau de haute qualité finale (ex : 16°C)),
- un quatrième module assure la conduite avancée de l'ensemble grâce à une analyse multicritères en continu des paramètres de procédé et de qualité d'eau mesurés en ligne : les systèmes de contrôle-commande sont mis en oeuvre de façon intégrée sur l'ensemble des modules opérationnels grâce à des algorithmes originaux.

La présente invention est originale en ce que l'énergie interne des eaux usées est employée pour réaliser leur recyclage à des taux supérieurs à 50% (compris entre 50% et 90%) et en ce que le système de conduite avancée porte simultanément sur l'optimisation des flux hydrauliques et sur l'optimisation énergétique.

La présente invention peut traiter une quantité substantielle d'eaux usées (eaux grises et/ou noires) comprise entre 10 m³/jour et 700 m³/jour ou plus, de préférence 15 m³/jour pour un dispositif de la présente invention utilisé par un nombre d'habitants compris entre 1 et 100 habitants et considéré comme étant un «petit» dispositif, ou de préférence 350 m³/jour pour un dispositif de la présente invention utilisé par un nombre d'habitants compris entre 101 et 1999 habitants et considéré comme étant un dispositif «moyen», ou encore de préférence 700 m³/jour pour un dispositif de la présente invention utilisé par un nombre d'habitants supérieur à 2000 habitants et considéré comme étant un «grand» dispositif. Le procédé de la présente invention comporte une étape anaérobie. Le réacteur de l'étape anaérobie de la présente invention peut contenir des microorganismes méthanogènes (produisant du méthane). Les microorganismes méthanogènes peuvent être choisis parmi la liste non limitative suivante : Methanobacterium bryantii, Methanobacterium formicum, Methanobrevibacter arboriphilicus, Methanobrevibacter gottschalkii, Methanobrevibacter ruminantium, Methanobrevibacter smithii, Methanocalculus chunghsingensis, Methanococcoides burtonii, Methanococcus aeolicus, Methanococcus deltae, Methanococcus jannaschii, Methanococcus maripaludis, Methanococcus vannielii, Methanocorpusculum labreanum, Methanoculleus bourgensis (Methanogenium olentangyi & Methanogenium bourgense), Methanoculleus marisnigri , Methanofollis liminatans, Methanogenium cariaci, Methanogenium frigidum, Methanogenium organophilum, Methanogenium wolfei , Methanomicrobium mobile, Methanopyrus kandleri, Methanoregula boonei, Methanosaeta concilii, Methanosaeta thermophila, Methanosarcina acetivorans, Methanosarcina barkeri, Methanosarcina mazei, Methanosphaera stadtmanae, Methanospirillium hungatei, Methanothermobacter defluvii (Methanobacterium defluvii), Methanothermobacter thermautotrophicus (Methanobacterium thermoautotrophicum), Methanothermobacter thermoflexus (Methanobacterium thermoflexum), Methanothermobacter wolfei (Methanobacterium wolfei), Methanothrix sochngenii.

Le procédé de la présente invention produit de l'énergie sous forme thermique et électrique grâce au couplage du réacteur (35) avec une mini centrale de cogénération (39). Le procédé de la présente invention produit additionnellement de l'énergie sous forme d'un fluide sous pression.
La mini centrale de cogénération (39) utilise le méthane produit par le réacteur (35) pour produire de l'énergie thermique et électrique.
Le procédé de la présente invention produit un rendement en biogaz par rapport à un effluent entrant compris entre 30% et 65% lorsqu'on travaille sur les plages de températures mésophiles (càd avec des microorganismes croissant à des températures comprises entre 25°C et 45 °C) et thermophiles (càd avec des microorganismes croissant à des températures comprises entre 45°C et 70°C) lors d'une utilisation pour un effluent domestique (appartement, hotel). L'étape c) produit un rendement en biogaz par rapport à un effluent entrant compris entre 50% et 95%, de préférence entre 50% et 90%, lorsqu'on travaille sur les plages de températures mésophiles et thermophiles lors d'une utilisation pour un effluent industriel (combinaison appartements - hôtels - hôpitaux - restaurants - écoles ...).
La conduite multi objectifs des étapes du procédé de la présente invention est assurée conjointement et simultanément et comprend l'optimisation hydraulique, énergétique et la tenue des objectifs de traitement.
Le dispositif multi modulaire de mise en oeuvre du procédé de la présente invention comprend une unité multi modules, dans lequel les étapes de la présente invention sont mises en oeuvre.
Dispositif multi modulaire de traitement et de purification d'eaux usées de la présente invention dans lequel une unité multi modules comprend quatre modules consistant en:
i) un premier module d'extraction de l'eau clarifiée comprenant au moins un appareil de séparation des éléments grossiers (10) et au moins une unité de concentration (11),
ii) un second module de production d'eau de haute qualité comprenant au moins un premier étage de filtration (22) et au moins un échangeur thermique (31) et au moins un second étage de filtration (26) et au moins un reminéralisateur,
iii) un troisième module de production d'énergie comprenant au moins une pompe à chaleur (32) et au moins un réacteur de production de biogaz (35) et pouvant comprendre au moins une unité de régulation du réacteur (34) et au moins une mini centrale de cogénération (39),
iv) un quatrième module pour assurer la conduite multi objectifs de l'unité multi-module comprenant au moins un automate et au moins un ordinateur.
Le premier module du dispositif selon la présente divulgation comprend en outre au moins une unité de préparation physico-chimique (15) et au moins une unité de traitement d'humidité des débris (16).
Le second module du dispositif selon la présente divulgation comprend en outre au moins un dispositif de clarification (21) et au moins une unité de contrôle d'intégrité en ligne (25). Le dispositif selon la présente divulgation peut être utilisé pour produire in situ de l'eau de haute qualité à partir d'eaux usées en récupérant de l'énergie thermique et de l'énergie chimique.
Le dispositif selon la présente divulgation peut aussi être utilisé pour stocker de l'énergie sous forme de fluide sous pression (comprimé).

La présente invention concerne un procédé intégré de production in situ d'eau de haute qualité à partir d'eaux usées caractérisé en ce que les niveaux de qualité requis pour les recyclages d'eaux usées sont atteints avec des intrants énergétiques au moins deux fois plus faible que les meilleurs systèmes de recyclage, et par la mise en oeuvre intégrée d'un module original d'extraction primaire d'eaux clarifiées, d'un module de production d'eaux recyclables et d'un module de récupération des énergies fatales.
Le procédé de la présente invention est caractérisé en ce qu'un système de production locale d'énergie à partir des énergies fatales (énergie chimique et thermique) co-extraites des eaux usées couvre ou compense plus de la moitié des besoins en énergie du procédé. Le procédé de la présente invention est piloté par un système de contrôle-commande caractérisé en ce qu'un jeu d'algorithmes communs assure un pilotage global et cohérent des transformations de matières, des flux hydrauliques, des qualités d'eau et des consommations d'énergie.
Le procédé de la présente invention est caractérisé en ce qu'un ensemble de logiciels originaux (ordinateurs) intégrant gestion des énergies et gestion des eaux assure leur pilotage intégré pour l'obtention d'eaux de qualité recyclable à très faible empreinte environnementale.

La présente invention concerne un **procédé** de traitement et de purification des eaux usées pour produire de l'eau potable (28) et de l'énergie (39a,39b) comprenant dans l'ordre les étapes suivantes:
a) introduction des eaux usées dans au-moins un appareil de séparation des éléments grossiers (10),
b) extraction d'une eau clarifiée (12) (une eau clarifiée est une eau dépourvue d'éléments grossiers) après passage dans au moins une unité de concentration (11) relié par un conduit audit au-moins un appareil de séparation des éléments grossiers (10),
c) introduction de l'eau clarifiée (12) successivement dans au moins un échangeur thermique (31 A, 31 B, 31 C) puis dans au moins un étage de filtration (22A,22B) et au moins un reminéralisateur (29), ledit au moins un échangeur thermique (31A, 31 B, 31 C) étant relié par un conduit audit au moins un étage de filtration (22A,22B) qui est lui-même relié par un conduit audit au moins un reminéralisateur (29),
d) production d'eau potable (28) après passage dans ledit au moins un reminéralisateur (29),
e) captage de l'énergie thermique récupérée dans l'eau clarifiée (12) après passage dans ledit au moins un échangeur thermique (31A, 31 B, 31 C) relié à au moins une pompe à chaleur (32A, 32B) et production de l'eau potable (28) issue de l'étape d) de manière conjointe et simultanée et,
f) production d'énergie électrique (39a) et d'énergie thermique (39b) par une mini centrale de co-génération (39) recevant du biogaz (38) produit par au moins un réacteur anaérobie (35) chauffé par au moins une boucle de fluide de chauffage (36) formant un circuit fermé, ledit réacteur anaérobie (35), alimenté par un flux d'effluent concentré (13) provenant de ladite au moins une unité de concentration (11), étant relié à ladite pompe à chaleur (32A, 32B) par ladite boucle de fluide de chauffage (36) dans laquelle circule l'énergie thermique provenant de l'étape e), ladite boucle de fluide de chauffage (36) se chargeant en énergie thermique au niveau de ladite pompe à chaleur (32A, 32B) et libérant ladite énergie thermique à l'intérieur dudit au moins un réacteur anaérobie (35), ladite au moins une pompe à chaleur (32A, 32B) étant elle-même reliée audit au moins un échangeur thermique (31A, 31B, 31C) par au moins une boucle de fluide caloporteur (33A, 33B, 33C),
g) assurer la conduite multi-objectifs par au moins un automate et au moins un ordinateur.
Le fluide dans ladite boucle de fluide de chauffage (36) formant un circuit fermé peut-être un liquide, un gaz ou un solide mélangé à un fluide. Un fluide est un milieu matériel parfaitement déformable.
Le procédé de la présente invention produit trois types d'énergies distinctes,
notamment de l'énergie thermique (36) issue des eaux usées récupérées par au-moins une pompe à chaleur (32A, 32B), de l'énergie électrique (39a) ayant comme origine le biogaz produit dans ledit au moins un réacteur anaérobie (35) et de l'énergie thermique (39b) ayant comme origine le biogaz produit dans ledit au moins un réacteur anaérobie (35), ladite énergie thermique (39b) étant stockée dans un réservoir (40) sous forme d'un fluide sous pression grâce au couplage du réacteur (35) avec la mini centrale de cogénération (39).
Le procédé de la présente invention produit de l'énergie thermique (39b) issue de la mini centrale de co-génération (39) qui est injectée à l'étape f) par un conduit dans la boucle de fluide de chauffage (36) reliée à ladite pompe à chaleur (32A, 32B) et audit réacteur anaérobie (35) pour chauffer ledit au moins un réacteur anaérobie (35).
Le procédé de la présente invention produit du biogaz qui peut être du méthane, de l'hydrogène, du dioxyde de carbone ou du sulfure d'hydrogène.

Le procédé de la présente invention produit un rendement en biogaz compris entre 30% et 65% lorsqu'on travaille sur les plages de températures mésophiles et thermophiles lors d'une utilisation pour un effluent domestique.
Le procédé de la présente invention produit un rendement en biogaz compris entre 50% et 95% lorsqu'on travaille sur les plages de températures mésophiles et thermophiles lors d'une utilisation pour un effluent industriel.
La présente invention concerne aussi un dispositif de traitement et de purification d'eaux usées pour produire de l'eau potable (28) et de l'énergie (39a,39b), ledit dispositif comprenant quatre modules consistant en:
i) un premier module d'extraction de l'eau clarifiée (12) à partir d'eaux usées (1), ledit premier module comportant successivement au moins un appareil de séparation des éléments grossiers (10) relié par un conduit à au moins une unité de concentration (11),
ii) un second module de production d'eau potable recevant ladite eau clarifiée (12) comportant successivement au moins un échangeur thermique (31 A, 31 B, 31 C), au moins un étage de filtration (22A,22B) et au-moins un reminéralisateur (29), ladite eau clarifiée (12) étant introduite successivement dans ledit au moins un échangeur thermique (31 A, 31 B, 31 C), dans ledit au moins un étage de filtration (22A,22B) et dans ledit au-moins un reminéralisateur (29) où l'eau clarifiée (12) est reminéralisée,
iii) un troisième module de production d'énergie électrique (39a) et d'énergie thermique (39b) comprenant au moins une mini centrale de co-génération (39) recevant du biogaz (38) produit par au moins un réacteur anaérobie (35), alimenté par un flux d'effluent concentré (13) provenant de ladite au moins une unité de concentration (11), lui-même relié à au moins une pompe à chaleur (32A, 32B) par au moins une boucle de fluide de chauffage (36) puisant de l'énergie thermique à ladite pompe à chaleur (32A, 32B) qui est elle-même reliée audit échangeur thermique (31 A, 31 B, 31 C) du second module par au moins une boucle de fluide caloporteur (33A, 33B, 33C), ledit au moins un réacteur anaérobie (35) étant chauffé par la boucle de fluide de chauffage (36) formant un circuit fermé et fournissant de l'énergie thermique récupérée par ledit échangeur thermique (31 A, 31 B, 31 C),
iv) un quatrième module pour assurer la conduite multi objectifs du premier, second et troisième module comprenant au moins un automate et au moins un ordinateur.
Le fluide dans ladite boucle de fluide de chauffage (36) formant un circuit fermé peut-être un liquide, un gaz ou un solide mélangé à un fluide. Un fluide est un milieu matériel parfaitement déformable.

Le dispositif de la présente invention produit de l'énergie thermique générée sous forme de vapeur (39b) par ladite au-moins une mini centrale de co-génération (39) ladite vapeur (39b) étant injectée par un conduit directement dans la boucle de fluide de chauffage (36).
Le troisième module du dispositif de la présente invention comprend au moins une unité de régulation (34) dudit réacteur anaérobie (35).
Le premier module du dispositif de la présente invention comprend en outre au moins une unité de préparation physico-chimique (15) et au moins une unité de traitement d'humidité des débris (16).
Le second module du dispositif de la présente invention comprend en outre au moins un dispositif de clarification (21) et au moins une unité de contrôle d'intégrité en ligne (25).
La présente invention comprend une utilisation du dispositif pour produire in situ de l'eau potable à partir d'eaux usées en récupérant de l'énergie thermique et de l'énergie chimique. La présente invention comporte aussi une utilisation du dispositif comprenant en outre le stockage de l'énergie thermique (39b) dans un réservoir (40) sous forme d'un fluide sous pression produit par ledit au moins un réacteur anaérobie (35).

### Description détaillée de modes de réalisation préférés de l'invention:

Diverses réalisations de la présente invention sont décrites à titre d'exemple uniquement, avec des renvois aux figures dans lesquelles :
- la figure 1 est une représentation schématique du dispositif et procédé d'une première réalisation préférée de la présente invention,
- la figure 2 est une représentation schématique du dispositif et procédé d'une seconde réalisation préférée de la présente invention,
- la figure 3A est une représentation schématique du dispositif et procédé d'une troisième réalisation préférée de la présente invention
- la figure 3B est une représentation schématique du dispositif et procédé d'une variante de la troisième réalisation préférée de la présente invention.

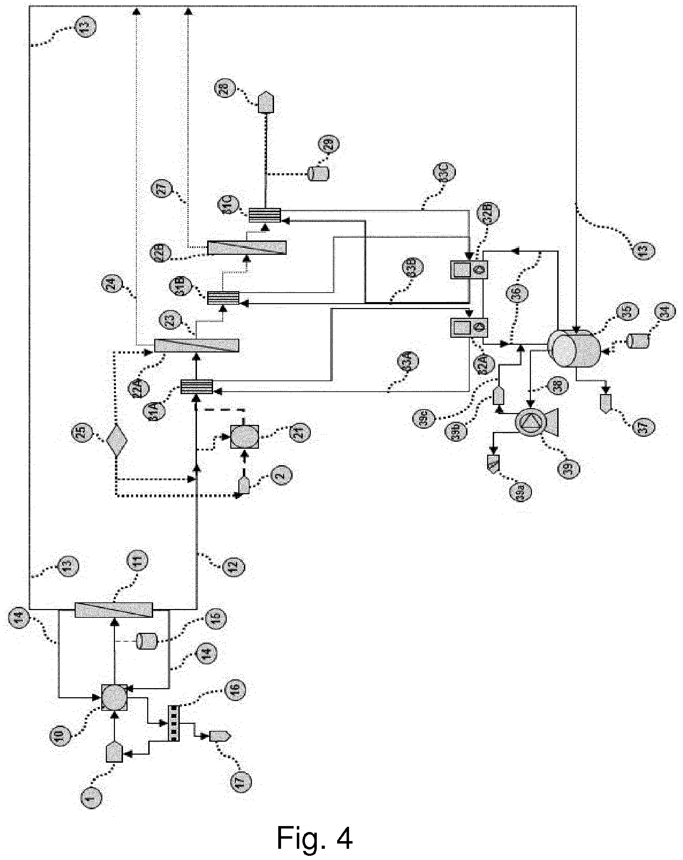

- La figure 4 est une représentation schématique du dispositif et procédé regroupant les trois modules, càd les figures 1 et 2 et 3A.

Le premier module de la présente invention combine un appareil (10) de séparation des éléments grossiers tels que fibres et fillasses (y compris cheveux & poils), débris solides de taille supérieure à 1 mm quelque soit leur matière, et une unité de concentration (11) produisant un flux d'eau totalement clarifiée (12) et un flux d'effluent concentré (13). Pour les préparer à l'extraction d'eau claire, l'appareil de prétraitement (10) reçoit les eaux usées entrantes, et s'adapte à chaque type d'eaux usées en utilisant une ou plusieurs opérations unitaires telles que mais non exclusivement pré filtration, hydrocyclonage.
L'appareil de prétraitement (10) est autonettoyant par utilisation d'une fraction des flux obtenus sur l'unité de concentration (11) grâce aux boucles de recirculation (14). Les débris retenus par l'appareil de prétraitement (10) sont débarrassés de leur humidité par un appareil (16) tel que mais non exclusivement égouttage, pressage, séchage, ..., puis évacués vers les circuits spécialisés (17). L'unité (11) consiste en un tamis moléculaire tel que mais non exclusivement des membranes, des tamis fins, ou tout autre milieu ou matériau ayant un seuil de coupure inférieur à 10 µm. La sélectivité de la rétention et l'efficacité de la concentration sont contrôlées par le choix des conditions hydrodynamiques appliquées l'unité (11), complété en tant que de besoin par la mise en oeuvre sur les effluents concentrés (13) entrants d'une préparation physico-chimique (15) telle que mais non exclusivement une floculation, une coagulation, un traitement électrique ou thermique, une modification de pH ou de force ionique.

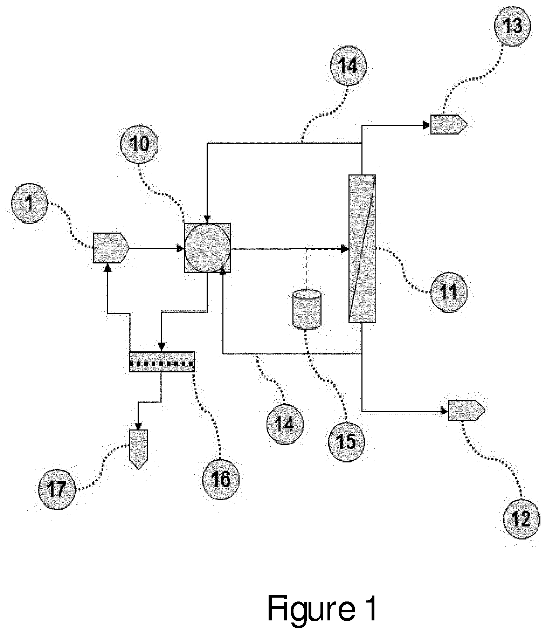

La figure 1 de la présente invention représente le premier module de préparation-concentration montrant les éléments et leurs signes de référence suivants :
- 1 :: Eaux usées brutes
- 10 :: Appareil de séparation des débris
- 11 :: Unité de concentration
- 12 :: Flux d'eau clarifiée
- 13 :: Flux concentré
- 14 :: Boucles de recirculation
- 15 :: Préparation physico-chimique
- 16 :: Appareil de traitement d'humidité des débris
- 17 :: Débris évacués

Le second module de la présente invention combine plusieurs barrières de filtration pour produire des eaux recyclables à partir du flux d'eau clarifié (12). Un dispositif de clarification (21) permet d'alimenter le module à partir d'autres sources (2) telles que mais non exclusivement l'eau potable du réseau public, des eaux souterraines, de l'eau dessalée, de l'eau de pluie. En tant que de besoin, ce dispositif (21) peut recevoir les eaux clarifiées (12) notamment lors de dégradation accidentelle de leur qualité. Un premier étage de filtration (22) comprend des filtres membranaires basse pression, de nature organique ou minérale, à peau interne ou externe, et opérés soit en mode de filtration frontale, soit en mode de filtration tangentielle. La séparation résulte en la production d'un très faible flux de concentrat (24) qui est évacué et d'un flux d'eau désinfectée recyclable (23). Ce dernier flux est soit utilisé directement pour des usages appropriés à sa qualité, en particulier sa désinfection complète, soit orienté vers le second étage membranaire (26) pour un traitement encore plus poussé. Le système de filtration membranaire (22) est sous le contrôle continu du testeur d'intégrité en ligne (25) qui interrompt automatiquement l'alimentation du module (12) et (2) en cas de défaut sur les filtres. Le second étage membranaire (26) consiste en des filtres membranaires sous haute pression tels que mais non exhaustivement nanofiltration, osmose directe ou inverse qui permettent de retenir les éléments minéraux en excès. Deux flux sont obtenus, un concentrat salin (27) qui est évacué, et une eau recyclable de très haute qualité (28) dont la minéralisation peut être ajustée de façon très contrôlée par le reminéralisateur (29).
Les récupérateurs de chaleur (31) placés sur les différents flux clairs du second module font partie du troisième module et sont régulés par le quatrième module pour la recherche d'un optimum entre récupération de thermies et performance de filtration sur les deux étages du second module.

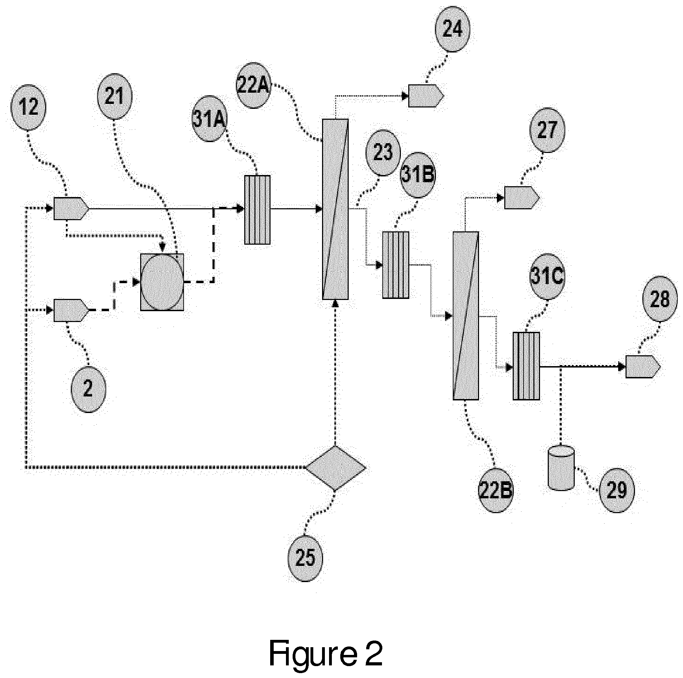

La figure 2 de la présente invention représente le second module de production d'eaux recyclées montrant les éléments et leurs signes de référence suivants :
- 2 :: Sources d'eau alternatives
- 12 :: Eau claire issue du premier module
- 21 :: Dispositif de clarification
- 22 :: Premier étage de filtration
- 23 :: Eau recyclable haute qualité
- 24 :: Concentrat premier étage
- 25 :: Unité de contrôle d'intégrité en ligne
- 26 :: Second étage de filtration
- 27 :: Concentrat second étage
- 28 :: Eau recyclée très haute qualité
- 29 :: Reminéralisateur
- 31 :: échangeurs thermiques

Le troisième module de la présente invention rassemble les dispositifs de récupération de thermies (31) et l'unité de production d'énergie (32). Au point d'usage, le delta (la différence) de température pour la récupération de la chaleur des eaux usées est de 8 à 15°C, ce qui permet d'installer des échangeurs thermiques (31) couplés ou non à une ou plusieurs pompes à chaleur (32) par les boucles (33) de fluide caloporteur. Les thermies prises aux eaux usées sont transmises au réacteur anaérobie (35) par la boucle (36) circulant dans sa double paroi, assurant la majeure partie de son chauffage jusqu'au point de fonctionnement mésophile ou thermophile. Le réacteur (35) est alimenté par le flux d'effluent concentré (13) et il produit du biogaz (38) qui est immédiatement converti en électricité (39a) et en vapeur (39b) par la mini centrale de cogénération (39). L'électricité verte (39a) est livrée au réseau en compensation de l'électricité employée ou en excès. Les thermies de la vapeur sont apportées à la boucle (36) de chauffage du réacteur (35), cette boucle étant asservie aux consignes de température. Une unité de régulation (35a) contrôle et maintien les paramètres essentiels du réacteur (35) tels que mais non exclusivement le pH, la concentration en produits réactionnels, la quantité de biogaz produite, la proportion de méthane (CH₄) dans le biogaz, la concentration en inhibiteurs. Le réacteur (39) peut être à culture libre, de tous types, ou à culture fixée, fluidisée ou non, et il répond aux normes de sécurité. La fraction (37) d'effluent non convertie en biogaz est évacuée.

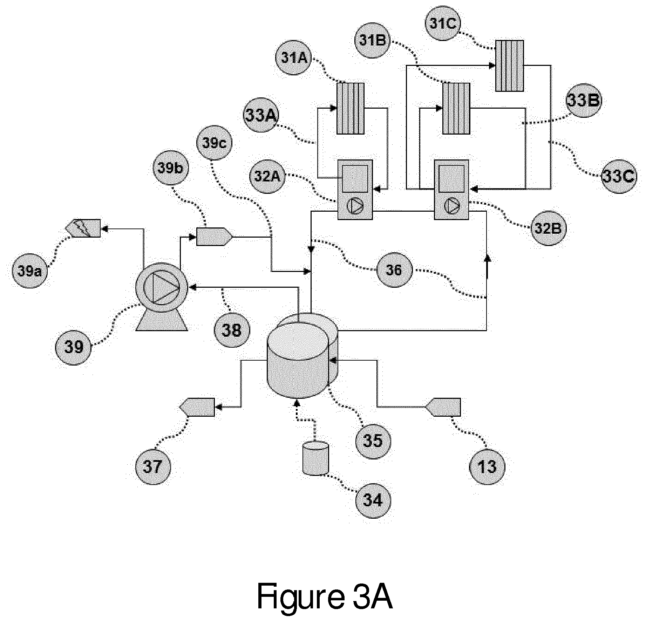

La figure 3A de la présente invention représente le troisième module de récupération et de production d'énergie montrant les éléments et leurs signes de référence suivants :
- 13 :: Flux d'effluent concentré
- 31A, 31B, 31C :: Echangeurs thermiques
- 32A, 32B :: Pompes à chaleur
- 33A, 33B, 33C :: Boucles de couplage échangeur-PAC
- 34 :: Unité de régulation du réacteur
- 35 :: Réacteur de production de biogaz
- 36 :: Boucle de fluide de chauffage du réacteur (35)
- 37 :: Purge du réacteur
- 38 :: Biogaz
- 39 :: Mini centrale de cogénération
- 39a :: Electricité verte
- 39b :: Vapeur
- 39c :: conduit amenant la vapeur à la boucle de fluide de chauffage (36)

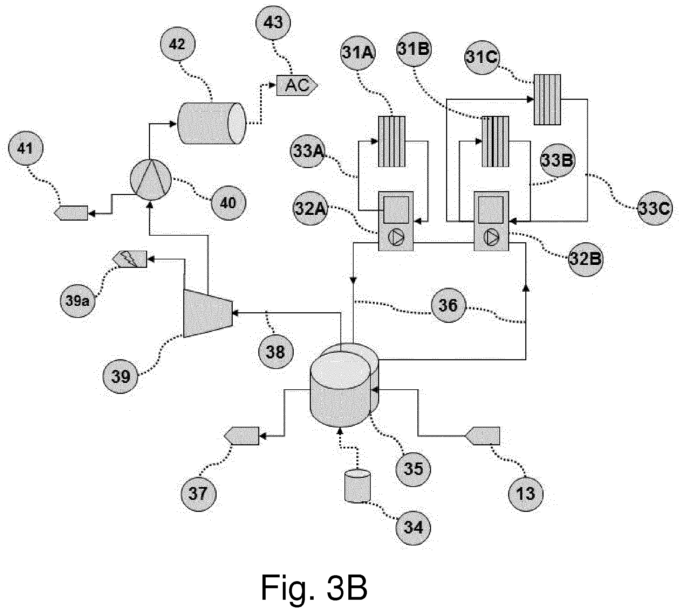

La figure 3B montre un autre mode de réalisation du troisième module de la présente invention dans lequel le biogaz (38) produit par le réacteur (35) est immédiatement converti en électricité (39a) par une turbine (39). L'électricité verte (39a) est livrée au réseau en compensation de l'électricité employée ou en excès. Le gaz (41) issu de la combustion est repris dans un compresseur d'air (40). Le fluide comprimé (43) (de préférence l'air ou l'eau) constitue une forme d'énergie qui peut être stockée dans un réservoir sous pression (42) en vue d'une utilisation différée (par exemple pour le nettoyage sous pression des ordures). La figure 3B de la présente invention représente un autre mode de réalisation du troisième module de récupération et de production d'énergie montrant les éléments et leurs signes de référence suivants :
- 13 :: Flux d'effluent concentré
- 31 :: Echangeurs thermiques
- 32 :: Pompes à chaleur
- 33 :: Boucles de couplage échangeur-PAC
- 34 :: Unité de régulation du réacteur
- 35 :: Réacteur de production de biogaz
- 36 :: Boucle de fluide de chauffage du réacteur (35)
- 37 :: Purge du réacteur
- 38 :: Biogaz
- 39 :: Mini centrale de cogénération
- 39a :: Electricité verte
- 40 :: Compresseur d'air
- 41 :: Gaz de combustion
- 42 :: Réservoir d'air comprimé
- 43 :: Air comprimé
Le quatrième module de la présente invention recueille l'information transmise par l'ensemble des instruments et capteurs des trois premiers modules. De façon originale, un suivi détaillé des informations sur l'énergie est assuré en même temps que le suivi usuel des paramètres des procédés, sur le même automate et le même ordinateur, ce qui permet la mise en place d'une conduite avancée multi-objectifs par des algorithmes nouveaux optimisant à la fois les performances du procédé et l'empreinte environnementale. Le terme « conduite avancée » peut être défini comme la combinaison des étapes de mesure et de contrôle et de commande de la présente invention.
Bien que les figures 1, 2 et 3A et les figures 1, 2 et 3B sont représentées sur des feuilles séparées, les modules des figures 1, 2 et 3A et des figures 1, 2 et 3B sont reliés entre eux.

### Mode de réalisation préférentiel:

### Premier module :

Les eaux usées (1) sont introduites par un conduit dans un appareil de séparation des éléments grossiers (10) d'où sortent les eaux usées débarrassées des éléments grossiers et qui sont ensuite introduites par un conduit dans une unité de concentration (11) d'où sortent d'une part un flux concentré (13) et d'autre part un flux d'eau clarifiée (12). Un conduit relie l'appareil de séparation des éléments grossiers (10) à un appareil de traitement d'humidité des débris (16) qui évacue les débris (17) par un conduit. Une préparation physico-chimique (15) peut se greffer sur le conduit entre l'appareil de séparation des éléments grossiers (10) et l'unité de concentration (11). Des boucles de recirculation peuvent relier chaque sortie de l'unité de concentration (11) vers l'appareil de séparation des éléments grossiers (10).

### Second Module :

L'eau clarifiée (12) est ensuite introduite dans un échangeur thermique (31) et une fois sortie de celui-ci elle est introduite dans un étage de filtration (22). Cette série échangeur thermique (31) et étage de filtration (22) peut se répéter plusieurs fois (2, 3, 4, 5, 6, 7, 8, 9, 10 fois ou plus). Un reminéralisateur (29) peut se greffer sur le conduit sortant du dernier échangeur thermique (31) de la série avant d'obtenir de l'eau potable (28). Une source d'eau alternative (2) peut être introduite dans un dispositif de clarification (21) qui peut être greffé sur le conduit rejoignant le premier échangeur thermique (31). Un concentrat du premier étage (24) sort du premier étage de filtration (22). Un concentrat du second étage (27) sort du second étage de filtration (26). De l'eau recyclable de haute qualité sort du premier étage de filtration (22). Une unité de contrôle d'intégrité en ligne peut se greffer au niveau du premier étage de filtration (22).

### Troisième module :

Au moins un échangeur thermique (31) est couplé à au moins une pompe à chaleur (32) et forme une boucle, les duos échangeur thermique (31) - pompe à chaleur (32) fonctionnent en série et/ou en parallèle. Des boucles de fluide caloporteur (33) relient les échangeurs thermiques (31) aux pompes à chaleur (32). On obtient une production d'énergie électrique (39a) et d'énergie thermique (39b) grâce à une mini centrale de co-génération (39) recevant du biogaz (38) produit par un réacteur anaérobie (35) lui-même relié à au moins une pompe à chaleur (32) par une boucle de chauffage (36) puisant de l'énergie thermique auxdites pompes à chaleur (32) qui sont elles-mêmes reliées audits échangeurs thermiques (31) du second module par au moins une boucle de fluide caloporteur (33) et ledit réacteur anaérobie (35) est chauffé par la boucle de chauffage (36) formant un circuit fermé et fournissant de l'énergie thermique récupérée par lesdits échangeurs thermiques (31). L'énergie thermique issue de l'appareil (39b) peut être réinjectée dans la boucle de chauffage (36). Le flux d'effluent concentré peut être introduit par un conduit directement dans ledit réacteur anaérobie (35). Une unité de régulation (34) du réacteur anaérobie (35) peut se greffer sur ledit réacteur anaérobie (35). Le réacteur anaérobie (35) peut être purgé par un conduit de purge (37) du réacteur. Alternativement, on peut aussi obtenir de l'air comprimé (43) à partir de ladite mini centrale de co-génération (39) reliée à un compresseur d'air (40) qui est lui-même relié à un réservoir d'air comprimé (42). Un gaz de combustion (41) peut sortir du compresseur d'air (40).

### Quatrième module:

La présente invention comprend un quatrième module pour assurer la conduite multi objectifs du premier, second et troisième module comprenant au moins un automate et au moins un ordinateur.
Les trois premiers modules sont successivement reliés entre eux, càd le premier module est relié au second module qui est lui-même relié au troisième module. Le quatrième module est relié à chacun des trois autres modules.

En synthèse, le tableau 1 ci-après confirme l'absence d'art antérieur pertinent et confirme la nouveauté et l'activité inventive de la présente invention. Les valeurs indiquées dans le tableau ont été calculées en tenant compte des normes internationales en vigueur et connues par l'homme du métier.

**Tableau 1 : tableau comparatif du dispositif de la présente invention avec l'art antérieur**

| **Fonction technique** | **Traitement** | **Economie d'énergie** | **Optimum hydraulique** | **Intégrations d'usage** |
|---|---|---|---|---|
| **Critère(s)** | Qualité de l'eau recyclée produite (grades) Directives UE 91/271/CE et 98/15/CE | Taux d'utilisation de l'énergie interne des eaux usées (%) pour chauffer le réacteur anaérobie | Compacité du dispositif « Empreinte au sol » (plus compact = 1) (moins compact = 10) | Fonctions disponibles (nombre & liste) |
| **Plage du critère (pire <> meilleure)** | 1<>6 | 0%<>100% | 10 <> 1 | 1 fonction <> 5 fonctions |
| **présente invention** | entre 5 et 6 | 50% à 90% | 1,5 à 1 | 5 : |
| | | | | - traitement eaux usées |
| | | | | - production eau potable |
| | | | | - préservation ressources en eau |
| | | | | - utilisation énergies fatales |
| | | | | - pilotage multi-objectifs |
| US 6838000 (US Pub N°20030070986) | entre 4 et 5 | 0% | 7 à 5 | 3 : |
| | | | | - traitement eaux usées |
| | | | | - production eau recyclée |
| | | | | - préservation ressources en eau |
| **US 6290852** | 4 | 0% | 3 à 1,5 | 2 : |
| | | | | - traitement eaux usées |
| | | | | - production eau recyclée |
| US 20080201018 | entre 2 et 3 | 0% | 9à7 | 2: |
| | | | | - traitement eaux usées |
| | | | | - pas de pilotage multi-objectifs, mais pilotage multi-installations |
| **Critère(s)** | Qualité de l'eau recyclée produite (grades) Directives UE 91/271/CE et 98/15/CE | Taux d'utilisation de l'énergie interne des eaux usées (%) pour chauffer le réacteur anaérobie | Compacité du dispositif « Empreinte au sol » (plus compact = 1) (moins compact = 10) | Fonctions disponibles (nombre & liste) |
| **Plage du critère (pire <> meilleure)** | 1<>6 | 0%<>100% | 10 <> 1 | 1 fonction <> 5 fonctions |
| **présente invention** | entre 5 et 6 | 50% à 90% | 1 à 1,5 | 5 : |
| | | | | - traitement eaux usées |
| | | | | - production eau potable |
| | | | | - préservation ressources en eau |
| | | | | - utilisation énergies fatales |
| | | | | - pilotage multi-objectifs |
| US 2007/0199894 | entre 5 et 6 | 10% à 20% | 4à5 | 3 : |
| | | | | - production d'eau potable |
| | | | | - préservation ressources en eau |
| | | | | - utilisation énergies fatales |
| EP0127240 | entre 2 et 3 | 0% | 5à6 | 1 : |
| | | | | - traitement eaux usées |

L'homme du métier sait comment réaliser les tests du tableau 1.

La qualité de l'eau recyclée produite est notée de 1 à 6 (1 étant la note la plus mauvaise et 6 étant la meilleure note).
Le taux d'utilisation de l'énergie interne des eaux usées est exprimé en % (0% étant le pourcentage le plus faible et 100% étant le pourcentage le plus élevé). L'énergie interne des eaux usées correspond à de l'énergie chimique (par exemple les matières carbonées telles que les matières fécales) et à de l'énergie thermique (différence de température entre la température d'entrée des eaux usées dans le dispositif de la présente invention (environ 28°C) et la température finale de l'eau de haute qualité (environ 16°C) récupérée par au-moins une pompe à chaleur (32A, 32B) dans la boucle de fluide de chauffage (36) à laquelle s'ajoute de l'énergie thermique (39b) produite par le réacteur (35) qui peut être réinjectée dans la boucle de fluide de chauffage (36) au moyen du conduit (39c)).
Pour la présente invention le taux d'utilisation de l'énergie interne des eaux usées (%) pour chauffer le réacteur anaérobie est compris entre 50% et 90%, de préférence entre 55% et 95%, cet intervalle de valeur est issu de la boucle de fluide de chauffage (36) et de l'énergie thermique (39b) ayant pour origine le réacteur (35).

La compacité du dispositif est notée de 1 à 10 (la note 1 correspondant au dispositif le plus compact et la note 10 correspondant au dispositif le moins compact). La compacité du dispositif est définie par la surface au sol couverte par le dispositif.

Le tableau 1 prouve que le dispositif de la présente invention produit de l'eau potable ayant constamment une excellente qualité (eau potable), tout en utilisant 50% à 90% de l'énergie interne des eaux usées, alors que les documents de l'état de la technique n'utilisent jamais l'énergie interne des eaux usées.
Ainsi, l'homme du métier ayant connaissance des documents de l'état de la technique et combinant ces documents n'aurait jamais pu réaliser le dispositif de la présente invention car il lui manque l'enseignement « comment injecter de l'énergie thermique dans le dispositif, cette énergie thermique étant récupérée dans les eaux usées, et ainsi la boucle de fluide de chauffage (36) est nouvelle et inventive par rapport à l'état de la technique ».

Certaines caractéristiques de l'invention qui sont décrites sous forme de mode de réalisation séparés par soucis de clarté, peuvent aussi être fournies en combinaison dans un mode de réalisation unique. A l'opposé certaines caractéristiques de l'invention qui sont décrites sous forme de mode de réalisation en combinaison dans un mode de réalisation unique, peuvent aussi être fournies séparément sous forme de plusieurs modes de réalisation séparés.

Bien que l'invention ait été décrite en conjonction avec des modes de réalisation spécifiques de celui-ci, il est évident que plusieurs alternatives, modifications et variations peuvent être détectées par un homme du métier. Ainsi, nous avons l'intention d'englober de telles alternatives, modifications et variations qui tombent dans la portée des revendications de la présente invention.

## Revendications

1. **Procédé** de traitement et de purification des eaux usées (1) pour produire de l'eau potable (28) et de l'énergie électrique (39a) et de l'énergie thermique (39b), comprenant dans l'ordre les étapes suivantes:
a) introduction des eaux usées (1) dans au-moins un appareil de séparation des éléments grossiers (10),
b) extraction d'une eau clarifiée (12) après passage dans au moins une unité de concentration (11) relié par un conduit audit au-moins un appareil de séparation des éléments grossiers (10),
c) introduction de l'eau clarifiée (12) successivement dans au moins un échangeur thermique (31A, 31 B, 31C) puis dans au moins un étage de filtration (22A, 22B) avant reminéralisation par au moins un reminéralisateur (29), ledit au moins un échangeur thermique (31A, 31 B, 31 C) étant relié par un conduit audit au moins un étage de filtration (22A, 22B) qui est lui-même relié par un conduit audit au moins un reminéralisateur (29),
d) production d'eau potable (28) après reminéralisation par ledit au moins un reminéralisateur (29),
e) captage de l'énergie thermique récupérée dans l'eau clarifiée (12) après passage dans ledit au moins un échangeur thermique (31A, 31 B, 31 C) relié à au moins une pompe à chaleur (32A, 32B) et production de l'eau potable (28) issue de l'étape d) de manière conjointe et simultanée et,
f) production d'énergie électrique (39a) et d'énergie thermique (39b) par une mini centrale de co-génération (39) recevant du biogaz (38) produit par au moins un réacteur anaérobie (35) alimenté par un flux d'effluent concentré (13) provenant de ladite au moins une unité de concentration (11),
**caractérisé en ce que** ledit réacteur anaérobie (35) est chauffé par au moins une boucle de fluide de chauffage (36) formant un circuit fermé, ledit réacteur anaérobie (35) étant relié à ladite pompe à chaleur (32A, 32B) par ladite boucle de fluide de chauffage (36) dans laquelle circule l'énergie thermique provenant de l'étape e), ladite boucle de fluide de chauffage (36) se chargeant en énergie thermique au niveau de ladite au-moins une pompe à chaleur (32A, 32B) et libérant ladite énergie thermique à l'intérieur dudit au moins un réacteur anaérobie (35), ladite au moins une pompe à chaleur (32A, 32B) étant elle-même reliée audit au moins un échangeur thermique (31A, 31 B, 31 C) par au moins une boucle de fluide caloporteur (33A, 33B, 33C),
g) assurer la conduite multi-objectifs par au moins un automate et au moins un ordinateur.

2. Procédé selon la revendication 1 dans lequel l'énergie produite comprend trois types d'énergies distinctes, notamment
- de l'énergie thermique circulant dans la boucle de fluide de chauffage (36) issue des eaux usées (1) récupérées par au-moins une pompe à chaleur (32A, 32B),
- de l'énergie électrique (39a) ayant comme origine le biogaz produit dans ledit au moins un réacteur anaérobie (35) et
- de l'énergie thermique (39b) ayant comme origine le biogaz produit dans ledit au moins un réacteur anaérobie (35), ladite énergie thermique (39b) étant stockée dans un réservoir (40) sous forme d'un fluide sous pression grâce au couplage du réacteur (35) avec la mini centrale de cogénération (39).

3. Procédé selon la revendication 1 dans lequel de l'énergie thermique (39b) issue de la mini centrale de co-génération (39) est injectée à l'étape f) par un conduit (39c) dans la boucle de fluide de chauffage (36) reliée à ladite pompe à chaleur (32A, 32B) et audit réacteur anaérobie (35) pour chauffer ledit au moins un réacteur anaérobie (35).

4. Procédé selon la revendication 1 dans lequel le biogaz est du méthane, de l'hydrogène, du dioxyde de carbone ou du sulfure d'hydrogène.

5. Procédé selon la revendication 1 dans lequel l'étape f) produit un rendement en biogaz compris entre 40% et 65% lorsqu'on travaille sur les plages de températures mésophiles et thermophiles lors d'une utilisation pour un effluent domestique.

6. Procédé selon la revendication 1 dans lequel l'étape f) produit un rendement en biogaz compris entre 50% et 95% lorsqu'on travaille sur les plages de températures mésophiles et thermophiles lors d'une utilisation pour un effluent industriel.

7. **Dispositif** de traitement et de purification d'eaux usées (1) pour produire de l'eau potable (28) et de l'énergie électrique (39a) et de l'énergie thermique (39b), ledit dispositif comprenant quatre modules consistant en :
i) un premier module d'extraction d'une eau clarifiée (12) à partir des eaux usées (1), ledit premier module comportant au moins un appareil de séparation des éléments grossiers (10) relié par un conduit à au moins une unité de concentration (11),
ii) un second module de production d'eau potable (28) recevant ladite eau clarifiée (12) comportant au moins un échangeur thermique (31A, 31 B, 31 C), au moins un étage de filtration (22A,22B) et au-moins un reminéralisateur (29),
ladite eau clarifiée (12) étant introduite successivement dans ledit au moins un échangeur thermique (31A, 31 B, 31 C), dans ledit au moins un étage de filtration (22A, 22B) avant reminéralisation de l'eau clarifiée (12) par ledit au-moins un reminéralisateur (29),
iii) un troisième module de production d'énergie électrique (39a) et d'énergie thermique (39b) comprenant au moins une mini centrale de co-génération (39) recevant du biogaz (38) produit par au moins un réacteur anaérobie (35) alimenté par un flux d'effluent concentré (13) provenant de ladite au moins une unité de concentration (11),
**caractérisé en ce que** ledit réacteur anaérobie (35) est lui-même relié à au moins une pompe à chaleur (32A, 32B) par au moins une boucle de fluide de chauffage (36) puisant de l'énergie thermique à ladite pompe à chaleur (32A, 32B) qui est elle-même reliée audit échangeur thermique (31A, 31 B, 31 C) du second module par au moins une boucle de fluide caloporteur (33A, 33B, 33C), ledit au moins un réacteur anaérobie (35) étant chauffé par la boucle de fluide de chauffage (36) formant un circuit fermé et fournissant de l'énergie thermique récupérée par ledit échangeur thermique (31A, 31 B, 31 C),
iv) un quatrième module pour assurer la conduite multi objectifs du premier, second et troisième module comprenant au moins un automate et au moins un ordinateur.

8. Dispositif selon la revendication 7 dans lequel de l'énergie thermique est générée sous forme de vapeur (39b) par ladite au-moins une mini centrale de co-génération (39), ladite vapeur (39b) étant injectée par un conduit (39c) directement dans la boucle de fluide de chauffage (36).

9. Dispositif selon la revendication 7 dans lequel le troisième module comprend au moins une unité de régulation (34) dudit réacteur anaérobie (35).

10. Dispositif selon la revendication 7 dans lequel le premier module comprend en outre au moins une unité de préparation physico-chimique (15) et au moins une unité de traitement d'humidité des débris (16).

11. Dispositif selon la revendication 7 dans lequel le second module comprend en outre au moins un dispositif de clarification (21).

12. Dispositif selon la revendication 7 dans lequel le second module comprend en outre au moins une unité de contrôle d'intégrité en ligne (25).

13. **Utilisation** du dispositif selon les revendications 7 à 12 pour produire in situ de l'eau potable (28) à partir d'eaux usées (1) et en récupérant de l'énergie thermique (36,39b).

14. **Utilisation** du dispositif selon les revendications 7 à 12 comprenant en outre le stockage de l'énergie thermique (39b) dans un réservoir (40) sous forme d'un fluide sous pression issu du biogaz (38) produit par ledit au moins un réacteur anaérobie (35).

## Patentansprüche

1. Verfahren zur Aufbereitung und zur Reinigung von Abwasser (1) zwecks Produktion von Trinkwasser (28) und von elektrischer Energie (39a) und von thermischer Energie (39b), umfassend in dieser Reihenfolge die folgenden Schritte:
a) Einleiten des Abwassers (1) in mindestens eine Abtrennungseinrichtung der groben Elemente (10),
b) Extrahieren von geklärtem Wasser (12) nach Durchgang in mindestens einer Konzentrationseinheit (11), die mit einer Leitung mit der mindestens einen Abtrennungseinrichtung der groben Elemente (10) verbunden ist,
c) Einleiten des geklärten Wassers (12) sukzessiv in mindestens einen Wärmetauscher (31A, 31 B, 31 C), dann in mindestens eine Filtrationsstufe (22A, 22B) vor Remineralisierung durch mindestens einen Remineralisator (29), wobei mindestens ein Wärmetauscher (31A, 31 B, 31 C) mit einer Leitung mit mindestens einer Filtrationsstufe (22A, 22B) verbunden ist, die selbst mit einer Leitung mit dem mindestens einen Remineralisator (29) verbunden ist,
d) Produzieren von Trinkwasser (28) nach Remineralisierung durch den mindestens einen Remineralisator (29),
e) Auffangen der im geklärten Wasser (12) wiedergewonnenen thermischen Energie nach Durchgang in dem mindestens einen Wärmetauscher (31A, 31 B, 31 C), der mit mindestens einer Wärmepumpe (32A, 32B) verbunden ist, und Produzieren von Trinkwasser (28) im Ergebnis von Schritt d) gemeinsam und gleichzeitig und
f) Produzieren von elektrischer Energie (39a) und von thermischer Energie (39b) durch ein Minikraftwerk mit Kraft-Wärme-Kopplung (39), das Biogas (38) erhält, produziert von mindestens einem anaeroben Reaktor (35), der von einem konzentrierten Abgangsstrom (13) aus der mindestens einen Konzentrationseinheit (11) versorgt wird,
**dadurch gekennzeichnet, dass** der anaerobe Reaktor (35) von mindestens einem Heizfluidkreis (36) beheizt wird, der einen geschlossenen Kreis bildet, wobei der anaerobe Reaktor (35) mit der Wärmepumpe (32A, 32B) durch den Heizfluidkreis (36) verbunden ist, in welchem die thermische Energie von Schritt e) zirkuliert, wobei der Heizfluidkreis (36) thermische Energie im Bereich der mindestens einen Wärmepumpe (32A, 32B) aufnimmt und die thermische Energie im Innern des mindestens einen anaeroben Reaktors (35) abgibt, wobei die mindestens eine Wärmepumpe (32A, 32B) selbst mit dem mindestens einen Wärmetauscher (31A, 31 B, 31 C) durch mindestens einen Wärmeträgerfluidkreis (33A, 33B, 33C) verbunden ist,
g) Sichern der multikriteriellen Lenkung durch mindestens eine Automatik und mindestens einen Rechner.

2. Verfahren nach Anspruch 1, wobei die produzierte Energie drei unterschiedliche Energietypen umfasst, vor allem
- thermische Energie, die im Heizfluidkreis (36) zirkuliert, aus dem Abwasser (1), wiedergewonnen von mindestens einer Wärmepumpe (32A, 32B),
- elektrische Energie (39a) mit dem in dem mindestens einen anaeroben Reaktor (35) produzierten Biogas als Ursprung, und
- thermischer Energie (39b) mit dem in mindestens einem anaeroben Reaktor (35) produzierten Biogas aus Ursprung, wobei die thermische Energie (39b) in einem Reservoir (40) in Form eines Fluids unter Druck dank der Kopplung des Reaktors (35) mit dem Minikraftwerk mit Kraft-Wärme-Kopplung (39) gespeichert wird.

3. Verfahren nach Anspruch 1, wobei thermische Energie (39b) aus dem Minikraftwerk mit Kraft-Wärme-Kopplung (39) in Schritt f) von einer Leitung (39c) in den Heizfluidkreis (36) gespeist wird, der mit der Wärmepumpe (32A, 32B) und dem anaeroben Reaktor (35) verbunden ist, um den mindestens einen anaeroben Reaktor (35) zu erhitzen.

4. Verfahren nach Anspruch 1, wobei das Biogas Methan, Wasserstoff, Kohlendioxid oder Hydrogensulfid ist.

5. Verfahren nach Anspruch 1, wobei der Schritt f) einen Biogasertrag zwischen 40 % und 65 % inklusive produziert, wenn bei einer Verwendung für einen domotischen Abgang in mesophilen und thermophilen Temperaturbereichen gearbeitet wird.

6. Verfahren nach Anspruch 1, wobei der Schritt f) einen Biogasertrag zwischen 50 % und 95 % inklusive produziert, wenn bei einer Verwendung für einen industriellen Abgang in mesophilen und thermophilen Temperaturbereichen gearbeitet wird.

7. Vorrichtung zur Aufbereitung und zur Reinigung von Abwasser (1) zwecks Produktion von Trinkwasser (28) und von elektrischer Energie (39a) und von thermischer Energie (39b), wobei die Vorrichtung vier Module umfasst, die bestehen aus:
i) einem ersten Extraktionsmodul von geklärtem Wasser (12) aus Abwasser (1), wobei das erste Modul mindestens eine Abtrennungseinrichtung der groben Elemente (10) aufweist, die mit einer Leitung mit mindestens einer Konzentrationseinheit (11) verbunden ist,
ii) ein zweites Produktionsmodul von Trinkwasser (28), welches das geklärte Wasser (12) empfängt, aufweisend mindestens einen Wärmetauscher (31A, 31 B, 31 C), mindestens eine Filtrationsstufe (22A, 22B) und mindestens einen Remineralisator (29),
wobei das geklärte Wasser (12) sukzessiv in den mindestens einen Wärmetauscher (31A, 31 B, 31 C), in die mindestens eine Filtrationsstufe (22A, 22B) vor Remineralisierung des geklärten Wassers (12) durch den mindestens einen Remineralisator (29) eingeleitet wird,
iii) ein drittes Produktionsmodul elektrischer Energie (39a) und thermischer Energie (39b), umfassend mindestens ein Minikraftwerk mit Kraft-Wärme-Kopplung (39), welches das Biogas (38) empfängt, das von mindestens einem anaeroben Reaktor (35) produziert wird, der von einem konzentrierten Abgangsstrom (13) aus der mindestens einen Konzentrationseinheit (11) versorgt wird,
**dadurch gekennzeichnet, dass** anaerobe Reaktor (35) selbst mit mindestens einer Wärmepumpe (32A, 32B) durch mindestens einen Heizfluidkreis (36) verbunden ist, der aus der Wärmepumpe (32A, 32B) thermische Energie aufnimmt, welche selbst mit dem Wärmetauscher (31A, 31 B, 31 C) des zweiten Moduls durch mindestens einen Wärmeträgerfluidkreis (33A, 33B, 33C) verbunden ist, wobei der mindestens eine anaerobe Reaktor (35) vom Heizfluidkreis (36) beheizt wird, welcher einen geschlossenen Kreis bildet und von dem Wärmetauscher (31A, 31 B, 31 C) wiedergewonnene thermische Energie bereitstellt,
iv) ein viertes Modul zum Sichern der mutikriteriellen Lenkung des ersten, zweiten und dritten Moduls, umfassend mindestens eine Automatik und mindestens einen Rechner.

8. Vorrichtung nach Anspruch 7, wobei die thermische Energie von dem mindestens einen Minikraftwerk mit Kraft-Wärme-Kopplung (39) in Form von Dampf (39b) erzeugt wird, wobei der Dampf (39b) mit einer Leitung (39c) direkt in den Heizfluidkreis (36) eingespeist wird.

9. Vorrichtung nach Anspruch 7, wobei das dritte Modul mindestens eine Regeleinheit (34) des anaeroben Reaktors (35) umfasst.

10. Vorrichtung nach Anspruch 7, wobei das erste Modul ferner mindestens eine physikalisch-chemische Vorbereitungseinheit (15) und mindestens eine Feuchtigkeitsbehandlungseinheit der Reste (16) umfasst.

11. Vorrichtung nach Anspruch 7, wobei das zweite Modul ferner mindestens eine Klärvorrichtung (21) umfasst.

12. Vorrichtung nach Anspruch 7, wobei das zweite Modul ferner mindestens eine Online-Integritätskontrolleinheit (25) umfasst.

13. Verwendung der Vorrichtung nach den Ansprüchen 7 bis 12 zur in situ-Produktion von Trinkwasser (28) aus Abwasser (1) und bei Wiedergewinnung von thermischer Energie (36, 39b).

14. Verwendung der Vorrichtung nach den Ansprüchen 7 bis 12, umfassend ferner das Speichern von thermischer Energie (39b) in einem Reservoir (40) in Form eines Fluids unter Druck aus Biogas (38), produziert von dem mindestens einen anaeroben Reaktor (35).

## Claims

1. **Process** for treating and purifying waste water (1) to produce potable water (28), electrical energy (39a) and thermal energy (39b), comprising the following steps in order:
(a) introducing waste water (1) into at least one separator (10) of coarse elements;
(b) extracting clarified water (12) after passage through at least one concentrator unit (11) connected via a conduit to said at least one coarse element separator (10);
(c) conveying the clarified water (12) successively into at least one heat exchanger (31A,31 B,31 C) then into at least one filtering stage (22A,22B) before remineralization by at least one remineralizer (29), said at least one heat exchanger (31A, 31 B, 31 C) being connected via a conduit to said at least one filtering stage (22A,22B) that itself is connected via a conduit to said at least one remineralizer (29):
(d) producing potable water (28) after remineralization by said at least one remineralizer (29);
(e) capturing the thermal energy recovered from the clarified water (12) after it has passed through said at least one heat exchanger (31A, 31 B, 31 C) connected to at least one heat pump (32A,32B), and producing potable water (28) derived from step d) concomitantly and simultaneously, and
(f) producing electrical energy (39a) and thermal energy (39b) by a mini co-generator unit (39) receiving biogas (38) produced by at least one anaerobic reactor (35) supplied with a flow of concentrated effluent (13) derived from said at least one concentrator unit (11),
**characterized in that** said anaerobic reactor (35) is heated by at least one heating fluid loop (36) forming a closed circuit, said anaerobic reactor (35) reactor being connected to said heat pump (32A,32B) by said heating fluid loop (36) in which there circulates the thermal energy derived from step e), said heating fluid loop (36) taking up thermal energy at said at least one heat pump (32A,32B) and releasing said thermal energy inside said at least one anaerobic reactor (35), said at least one heat pump (32A,32B) itself being connected to said at least one heat exchanger (31A,31 B,31 C) via at least one loop of heat exchange fluid (33A,33B,33C),
(g) ensuring multi-objective management via at least one controller and at least one computer.

2. The process according to claim 1, wherein the energy produced comprises three different types of energy, in particular:
- thermal energy circulating in the heating fluid loop (36) derived from the waste water (1) and recovered by at least one heat pump (32A,32B);
- electrical energy (39a) originating from the biogas produced in said at least one anaerobic reactor (35); and
- thermal energy (39b) originating from the biogas produced in said at least one anaerobic reactor (35), said thermal energy (39b) being stored in a tank (40) in the form of a pressurized fluid through the coupling of the reactor (35) with the mini co-generator unit (39).

3. The process according to claim 1, wherein the thermal energy (39b) derived from the mini co-generator unit (39) is injected at step f) via a conduit (39c) into the heating fluid loop (36) connected to said heat pump (32A,32B) and to said anaerobic reactor (35) to heat said at least one anaerobic reactor (35).

4. The process according to claim 1 wherein the biogas is methane, hydrogen, carbon dioxide or hydrogen sulfide.

5. The process according to claim 1, wherein step f) produces a biogas yield of between 40 % and 65 % when operating at mesophilic and thermophilic temperature ranges to treat domestic effluent.

6. The process according to claim 1, wherein step f) produces a biogas yield of between 50 % and 95 % when operating at mesophilic and thermophilic temperature ranges to treat industrial effluent.

7. **Device** for treating and purifying waste water (1) to produce potable water (28), electrical energy (39a) and thermal energy (39b), said device comprising four modules composed of:
(i) a first module to extract clarified water (12) from waste water (1), said first module comprising at least one coarse element separator (10) connected via a conduit to at least one concentrator unit (11);
(ii) a second module to produce potable water (28) receiving said clarified water (12), comprising at least one heat exchanger (31A,31B,31C), at least one filtering stage (22A,22B) and at least one remineralizer (29);
said clarified water (12) being successively led into said at least one heat exchanger (31A,31B,31C), into said at least one filtering stage (22A,22B) before remineralization of the clarified water (12) by said at least one remineralizer (29);
(iii) a third module to produce electrical energy (39a) and thermal energy (39a), comprising at least one mini co-generator unit (39) receiving biogas (38) produced by at least one anaerobic reactor (35) supplied with a flow of concentrated effluent (13) derived from said at least one concentrator unit (11) **characterized in that** said anaerobic reactor (35) is itself connected to at least one heat pump (32A,32B) via at least one heating fluid loop (36) drawing thermal energy at said heat pump (32A,32B) which itself is connected to said heat exchanger (31A,32B,31C) of the second module via at least one loop of heat exchange fluid (33A,33B,33C), said at least one anaerobic reactor (35) being heated by the heating fluid loop (36) forming a closed circuit and delivering thermal energy recovered by said heat exchanger (31A,31 B,31 C);
(iv) a fourth module to ensure multi-objective management of the first, second and third modules, comprising at least one controller and at least one computer.

8. The device according to claim 7, wherein thermal energy is generated in the form of steam (39b) by said at least one mini co-generator unit (39), said steam (39b) being injected via a conduit (39c) directly into the heating fluid loop (36).

9. The device according to claim 7, wherein the third module comprises at least one unit (34) regulating said anaerobic reactor (35).

10. The device according to claim 7, wherein the first module further comprises at least one physicochemical preparation unit (15) and at least one unit to treat debris moisture (16).

11. The device according to claim 7, wherein the second module further comprises at least one clarification device (21).

12. The device according to claim 7, wherein the second module further comprises at least one in-line integrity monitoring unit (25).

13. **Use** of the device according to 7 to 12 for the *in situ* production of potable water (28) from waste water (1) whilst recovering thermal energy (36,39b).

14. **Use** of the device according to claims 7 to 12, further comprising storage of the thermal energy (39b) in a tank (40) in the form of a pressurized fluid derived from the biogas (38) produced by said at least one anaerobic reactor (35).
